# EUROPEAN PATENT SPECIFICATION

(11) **EP 1 278 813 B1**
(45) Date of publication and mention of the grant of the patent: **21.06.2006**
(21) Application number: 01911459.4
(22) Date of filing: 07.03.2001
(51) Int. Cl.: C10J 3/84, C10J 3/20, C10J 3/06

(54) **A METHOD AND A SYSTEM FOR DECOMPOSITION OF MOIST FUEL OR OTHER CARBONACEOUS MATERIALS**
VERFAHREN UND SYSTEM ZUR ZERSETZUNG WASSERHALTIGER BRENNSTOFFE ODER ANDERER KOHLENSTOFFHALTIGER MATERIALIEN
PROCEDE ET SYSTEME DE DECOMPOSITION DE COMBUSTIBLES HUMIDES OU D'AUTRES MATIERES CARBONEES

(30) Priority: 15.03.2000 DK 200000417
(43) Date of publication of application: 29.01.2003
(73) Proprietor: COWI RADGIVENDE INGENIORER A/S, 2800 Lyngby (DK)
(72) Inventor: BENTZEN, Jens, Dall, DK-3460 Birker d (DK); HENRIKSEN, Ulrik, DK-2860 S borg (DK); HUMMELSH J, Reto, M., DK-2200 K benhavn N (DK)
(74) Representative: Plougmann & Vingtoft A/S
(86) International application number: PCT/DK2001/000145
(87) International publication number: WO 2001/068789

(56) References cited:
- DE-A1- 3 126 049
- DE-A1- 3 523 765
- GB-A- 2 030 273
- US-A- 4 284 416
- US-A- 4 614 523
- US-A- 5 439 491
- BRANDT P.; HENRIKSEN U.: 'DECOMPOSITION OF TAR IN PYROLYSIS GAS PARTIAL AND OXIDATION AND THERMAL CRACKING: PART 2' PROCEEDINGS IN BIOMASS FOR ENERGY AND INDUSTRY 1998, CONFERENCE PROCEEDINGS ARTICLE, pages 1616 - 1618, XP001069788

## Description

The present invention relates to a method and a system or installation for decomposition, gasification and/or combustion of fuel comprising biomass, e.g. wood chips, wood pellets or a combination of any such different fuels.

It is well known to produce gas and activated carbon from solid fuels. In case of thermal gasification of such fuels with large water content, e.g. wood chips or waste, pre-drying of the fuel is generally used to obtain high-energy efficiency. Such pre-drying may be performed by adding superheated steam to the fuel. Thus the steam absorbs further moist.

Reference is made to prior art disclosed in DE 29 27 240 C2, WO 81/00112, WO 87/04453, and US 5,494,653. Reference is further made to U. Henriksen, O. Christensen: "Gasification of Straw in a Two-stage 50 kW Gasifier" published in "8th European Conference on Biomass for Energy, Enviroment, Agriculture and Industry", volume 2, pp. 1568-1578, Vienna, Austria, October 1994, and to P. Brandt and U. Henriksen: "Decomposition of tar in pyrolysis gas by partial oxidation and thermal cracking" published in part 2 of "Proceedings in Biomass for Energy and Industry, 10th European Conference and Technology Exhibition" Wurzburg, Germany, 8-11 June 1998.

US-A-543991 discloses an apparatus for the allothermic gasification of coal with steam and comprising a pyrolysis zone, a gasification zone and a cooling zone. Coal dust is supplied to the pyrolysis zone and subsequently transferred to the other zones. The coal dust is fluidised in the various zones by overheated steam. Humid raw gas discharged from the cooling zone may be heated and recirculated to the pyrolysis zone.

DE-A-3523765 discloses a method and apparatus for gasifying carbonaceous fuels, which are passed through a pyrolysis zone and a coking zone. The pyrolysis gas is passed into an oxidation zone together with air or oxygen containing gas so as to obtain a complete combustion thereof. The combustion gases from the oxidation zone and solid material from the coking zone are transferred to a reduction zone, whereby tar components and other hazardous substances in the combustion gas may be avoided.

The present invention provides a improved method and an improved system or installation for decomposition biomass. Thus, the present invention provides a method for decomposing fuel comprising biomass, said method comprising heating the fuel at separate stages, including a drying stage, a pyrolysis stage, an oxidation stage and a gasification and/or combustion stage, to temperatures causing the fuel to decompose into gaseous and solid components, supplying steam into the pyrolysis stage, and subsequently partially oxidizing volatiles from the pyrolysis at the oxidation stage so as to decompose long molecular and condensable tars of the volatiles into smaller molecules that are less condensable prior to being transferred to the gasification and/or combustion stage, the fuel being heated at the various stages at least mainly by means of the gases formed by the oxidation, gasification and/or combustion processes.

One of the larger technical problems in decomposition of biomass is that the volatile products or gases produced contain an undesired content of tar, which tar condenses when the gases are cooled. By dividing the decomposition process into separate stages comprising pyrolysis with steam, partial oxidation, and gasification it is possible to obtain a rather small content of tar in the exhaust gases produced, and the method according to the invention may be used for decomposition of carbonaceous material in a large scale, since the intemal heat transfer overcomes the limitations in up scaling known from extemally heated reactors.

In the pyrolysis stage the solid organic fuel is typically heated to a temperature between 300° and 800° C and decomposed into a solid component and a gaseous component containing tar. In the oxidation stage air or another oxygen containing gas is supplied so as to cause a partial oxidation. Thereby the temperature may be increased to for example 1000°-1300° C, and most of the large tar molecules are decomposed into smaller gaseous molecules. Finally, in the gasification stage the hot exhaust gases from the oxidation stage are used to gasify the solid components, and the tar content of the gaseous phase or component is further reduced when contacting the solid phase or component of the material being processed.

A number of advantages are obtained by adding steam to a thermal gasification process, such as the pyrolysis stage. Such advantages comprise: lower process temperatures, higher char conversion, smaller production of particles, and presumably lower emissions of NOₓ, CO and UHC at the subsequent combustion.

Further advantages are
- A relatively simple and robust cleaning of gas due to the low tar content.
- A stable process even in fluid bed layout: Pyrolysis reaction times of about 1-5 minutes in a fluid bed layout results in a stable gasification process even when the feeding rate is varying.
- Compact pyrolysis reactors: Both moving bed and fluid bed pyrolysis reactors can be designed in more compact ways than of known stage divided gasification processes.
- Small and few parts (partial oxidation stage) with temperatures around 1000° C
- Clean flue gas, which may be used for district heating in condensing mode without condensate cleaning.

Other gasification reactors, in which pyrolysis and gasification take place, must be made from materials, which are able to resist very high temperatures, because such high temperatures may occur all over in the reactor. Therefore, it is advantageous to divide the process into stages so that the high temperatures occur in only some of these stages.

The method according to the invention may take advantage of the fact that the tar content in a hot gas (500 -1000°C) is reduced when passing through partially gasified char, and that activated carbon can be produced by pyrolysis with steam and by gasification with steam and CO₂ as gasification means. The use of steam, that can be condensed during gas conditioning, will increase the heat value ot the gas compared with other gasification agents.

Originally, the fuel comprising biomass to be processed by the method according to the invention usually contains more or less moisture, and in such case the fuel is preferably dried before being passed to the pyrolysis stage. Such drying may be performed in any manner, at a location or stage remote from the location of the other stages, and heated steam may then be supplied to the pyrolysis stage from another steam source, such as a steam source located adjacent to the pyrolysis stage.

In the preferred embodiment, however, the fuel is dried at a location adjacent to the pyrolysis stage. Thus, the moist fuel may be dried in a drying unit by contacting it with superheated steam, the dried fuel being transferred to the pyrolysis stage, where it is further heated and decomposed into solid and gaseous components, at least some of the steam having been used for drying the fuel in the drying unit being also used for further heating at the pyrolysis stage and/or in a subsequent processing stages.

Steam supplied to the drying unit and/or the pyrolysis stage may be superheated mainly by gasification gas and/or heat generated by oxidation of fuel components.

The fact that sensible heat from the gasification gas or from the attached combustion stage may be recovered and used for drying, pyrolysis and preheating of combustion and/or gasification air means that a high energy efficiency may be obtained by using the method according to the invention. When using sensible heat from the gasification or combustion stage for pyrolysis, a high outlet temperature is required (normally 500-800°C).

In a stage divided gasifier, the heat transfer to the pyrolysis process normally takes place by indirect heat transfer from the combustion stage through the outer extemal limits of the pyrolysis stage or unit. Thus, there are geometric limitations to up scaling of the pyrolysis reactor. This problem is overcome by this new invention where heat namely is transferred intemally in the reactors in combination with extemal heat exchangers.

In other downstream thermal gasification processes, the ashes may agglomerate and melt together at relatively low temperatures, which may cause closing down of the reactors.

This problem is overcome by this new invention by having only a limited zone of high temperature followed by endothermic steam gasification.

The method according to the invention may be used in high-grade thermal gasification of the fuel comprising biomass, such as wood chips or a combination of various other fuels. Then, the method may comprise supplying one or more of said fuels to a drying unit, in which the fuel is dried by contacting it with superheated steam supplied from a super heater so as to provide dried fuel, transferring the dried fuel to the pyrolysis stage, heating outlet steam/gas from the drying unit in a super heater supplying the superheated outlet steam/gas to the pyrolysis stage and/or another of the process stages, and supplying steam and volatiles from pyrolysis products there from to a first succeeding process stage, in which the volatile pyrolysis products are partially oxidized by adding an oxidizing agent, such as atmospheric air or oxygen.

The outlet steam/gas supplied to the pyrolysis stage may be heated in a super heater by product gas from the gasification stage and/or combustion gas from the combustion stage.

The products from said first succeeding process stage may be led to the next succeeding process step, where they react with the solid part of the product mass from the pyrolysis stage and generate gas and possibly particles, a char residue and/or ashes. The gas from this next process stage may wholly or partially together with one or more oxidation agents be led to a combustion unit where oxidation of the added tar/gases takes place.

The present invention provides a process for gasification of solid biomass with relatively high water content. The size of a plant for performing such a process may vary from 1 to about 250 MW input effect. The gasification process enables high-energy efficiency, a low tar content in the gas, takeout of activated carbon, low environmental impad in the form of emissions and condensates, even though the flue gas temperature from the combustion unit is relatively low. Because the method is divided into stages the parts of the reactors that have to be made from very temperature resistant materials can be reduced considerably. At the same time, the possibility of avoiding melting and agglomerating of ashes is increased.

This is due to the fact that according to the invention the gasification process is divided into the following stages: drying (if necessary), pyrolysis (where superheated steam is used as heating means), partial oxidation, gasification and combustion. Further, the high-temperature heat from the gasification gas and the flue gas can be utilised for the drying and pyrolysis stages. In practice, the different process stages may be connected or combined in different ways, e.g. drying and pyrolysis in the same reactor or pyrolysis, partial oxidation and gasification in an integrated reactor. This depends on the practical detailled design of the various components and the fuel used, including the humidity of the fuel.

As previously mentioned, according to a preferred embodiment the fuel is dried by means of superheated steam. The superheated steam may be circulated through the fuel and a heat exchanger. In the heat exchanger, energy is added to superheat the steam. When the superheated steam is contacted with the fuel, heat is transferred from the steam, and moisture from the fuel is absorbed in the steam. The dried fuel is transferred to the pyrolysis stage, and the outlet steam is superheated to a high temperature (e.g. 450-800°C) and supplied to the pyrolysis stage, in which the dried fuel is pyrolysed. In an oxidation stage or unit, in which the tar and combustible gasses are partially oxidized, an oxidizing agent is added to the volatile components from the pyrolysis stage or unit. The heated gasses and the char are led to a gasification unit or zone where the char is gasified. The evaporated moisture from the fuel or biomass may be superheated to a high temperature by heat exchange with the produced gasification gas and/or by heat exchange with flue gases from the combustion unit. Similarly, the circulating steam, which is used for drying, may be superheated by heat exchange with the produced gasification gas and/or by heat exchange with flue gases from the combustion unit.

In a specific embodiment further energy is supplied to the pyrolysis stage from the stage at which the partial oxidation takes place, for example as radiation, or from the gasification unit, for example as re-circulation of char or bed material. Thereby high pyrolysis temperatures and, consequently, an efficient degasification of the fuel are obtained.

In a specific embodiment, in addition to the products from the partial oxidation, superheated steam is also supplied to the gasification unit, possibly mixed with another gas. The conversion of char at the gasification stage or unit at a certain temperature is thereby improved, and the activation of the char will also be improved.

According to the invention the solid fuel components may be passed from the pyrolysis stage to the gasification stage totally or partially via a stage at which the volatile pyrolysis products are partially oxidized.

Furthermore, carbon may be taken out from the pyrolysis stage or unit to be used as activated carbon, for example for purifying condensate generated by cooling gasification gas or flue gas. A condensate free from i.a. organic compounds may then be obtained, whereby the condensate may be disposed of with limited environmental impact.

According to a specific embodiment of the invention carbon may also be taken out from the pyrolysis stage or unit or from the gasification unit and used as activated carbon for purifying the gasification gas. In this way, undesirable, mainly organic compounds can be removed from the gas.

The present invention further provides a system or plant for decomposing fuel comprising biomass said system comprising: a drying unit a pyrolysis unit or a similar processing unit adapted to heat and decompose the fuel into solid and gaseous components, means for supplying superheated steam into the fuel contained in the pyrolysis unit to heat the fuel therein, at least one further processing unit including an oxidation unit and in addition a gasification and/or combustion stage arranged downstream of the pyrolysis unit, means for supplying steam and volatile pyrolysis products from the pyrolysis unit to the oxidation unit, means for adding an oxidizer, such as air or another oxygen containing gas, to the volatile pyrolysis products in the oxidation unit for partially oxidizing the same, so as to decompose long molecular and condensable tars of the volatiles into smaller molecules that are less condensable, and means for transferring the partially oxidized volatile pyrolysis products from the oxidation unit to sald gasification and/or combustion stage. The drying unit may be at a location remote from the location of the other units.

The fuel comprising biomass used in the plant or system may be dry, such as pellets of wood, which have been dried and produced in a different plant and at another location. Preferably, however, moist fuel may be used, and the system or plant according to the invention may comprise a drying unit for drying the fuel by contacting it with superheated steam before the fuel is passed into the pyrolysis unit, said means for supplying superheated steam to the pyrolysis unit comprising connecting conduits for supplying at least part of the steam having been used for drying the fuel in the drying unit to the pyrolysis unit. When the fuel is heated and dried by means of superheated steam, in which the content of oxygen is very low, fire hazard may be considerably reduced or eliminated.

Said at least one further processing unit may comprise, for example, a gasification unit having transporting means for transferring solid fuel components from the pyrolysis unit to the gasification unit, which is adapted to heat and further decompose the solid fuel components supplied thereto, and an oxidation unit adapted to partially oxidize gaseous fuel components supplied from the pyrolysis unit, means being provided for transferring at least part of the heat energy generated by the oxidation process to the fuel components in the gasification unit.

As an example, the system or plant according to the invention may be used for high-grade thermal gasification of biomass, e.g. wood chips or a combination of different fuels. The system or plant may comprise at least one steam generator (drying unit or evaporator), a super heater to superheat the generated steam, a pyrolysis unit to which preferably superheated steam and dried fuel is fed, and in which the fuel is decomposed into a gaseous and a solid fraction, an oxidation unit, in which a gaseous fuel component generated in the pyrolysis unit is partially oxidized, whereby the tar content thereof is considerably reduced, and a gasification unit, in which solids from the pyrolysis reactor are gasified, and in which the tar content is further reduced due to contact between gas and solids. The system or plant may further comprise one or more of the following: Gas cooling devices in order to utilise the sensible energy in the gas, gas cleaning equipment for removing particles from the gas, and/or combustion devices e.g. engines or turbines for utilising chemical energy of the gas or devices for utilising the gas for producing other products.

A gasification plant for exploitation of the invention may be established by combining the drying unit, the pyrolysis unit, the partial oxidation zone and the gasification unit in one or more units. Otherwise, the plant could be constructed in compact form of modules and external heat exchangers.

Various embodiments of the system or plant according to the invention will now be further described with reference to the drawings, wherein
Fig. 1 diagrammatically illustrates how the basic processing units of the plant according to the invention may be interconnected.
Fig. 2 diagrammatically illustrates an embodiment, in which the pyrolysis unit is in the form of as crew conveyor, and in which the gasification unit is of the moving bed type producing gas for use in a gas engine,
Fig. 3 diagrammatically illustrates a preferred embodiment, wherein the pyrolysis unit and/or the gasification unit are of the moving bed type, and wherein the gas produced is used in a gas engine,
Figs. 4 and 5 diagrammatically illustrate embodiments, in which the pyrolysis and gasification units are integrated, and in which the gas produced is used in a gas engine, gas turbine or other combuster unit, and
Fig. 6 diagrammatically illustrates an embodiment, in which the pyrolysis and gasification units are pressurised and integrated, and in which the gas produced is used in a gas turbine.

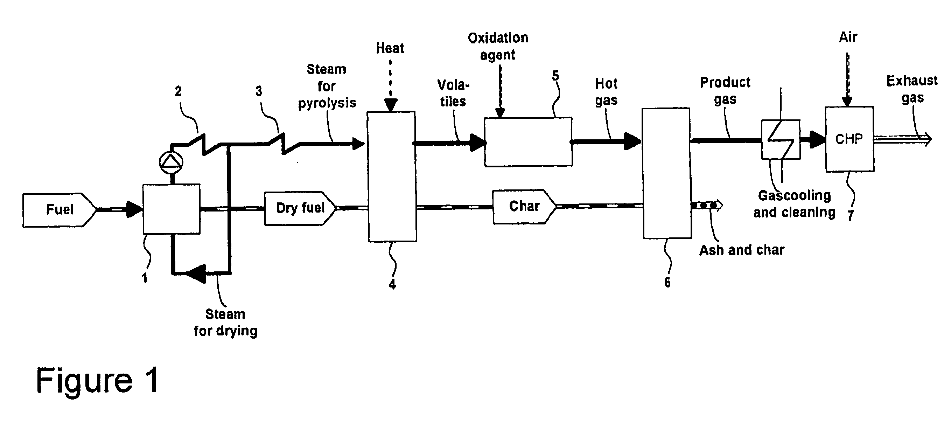

Figure 1 diagrammatically shows a plant according to the invention having a drying unit or dryer 1 to which a bio fuel is fed, a pyrolysis unit 4 to which dry fuel is supplied from the dryer 1, an oxidation unit, in which gaseous components from the pyrolysis unit 4 is partly oxidized, a gasification reactor 6, in which solid fuel components from the pyrolysis unit 4 is gasified, and a combustion unit 7 for finally oxidizing or buming the gaseous components.

In the dryer 1 the fuel is dried by superheated steam transferring energy to the fuel. Thereby the steam is cooled and will absorb moisture from the fuel. The steam is superheated in a super heater 2 and part of the steam is re-circulated to the dryer 1. The source for heat to be supplied to the super heater 2 may, for example, be flue gases from the combustion unit 7 or the hot product gas from the gasification reactor or unit 6. The remaining part of the steam is led to a steam super heater 3, in which the steam is superheated to about 500-800°C. The source for the heat supplied to the super heater 3 may also be hot product gas from the gasification reactor 6 or exhaust or flue gas from the combustion unit 7. The superheated steam is led to the pyrolysis unit 4, which may also be heated by other heat-sources. In the pyrolysis unit 4 fuel and steam will be mixed and thereby the temperature of the fuel will rise and the fuel will decompose into a solid fraction and a gaseous tarry fraction or volatiles. The volatiles are led to the oxidation unit 5, in which an oxidation agent, e.g. air, is added to cause a partial oxidation of the tar containing volatiles. In this oxidizing process the long molecular and condensable tars will decompose into smaller molecules that are less condensable. Furthermore, the temperature in the gasification unit 5 increases to about 1000-1300°C. The combustion products from unit 5 and the solid fuel component from the pyrolysis unit 4 are led to the gasification reactor or unit 6, in which the carbon part is wholly or partially gasified. A solid fraction can be taken out separately or together with the produced gas, which is cooled and cleaned in a cleaning device and finally burnt in the combustion unit 7.

If the system or plant shown in Fig. 1 is used for processing dry fuels, such as wooden pellets, the dryer or drying unit 1 may be dispensed with and replaced by an evaporator or steam generator (not shown) to generate steam, which is supplied to the pyrolysis unit 4. The heat source used for the super heater 2 may also be used for the evaporation of water in the steam generator.

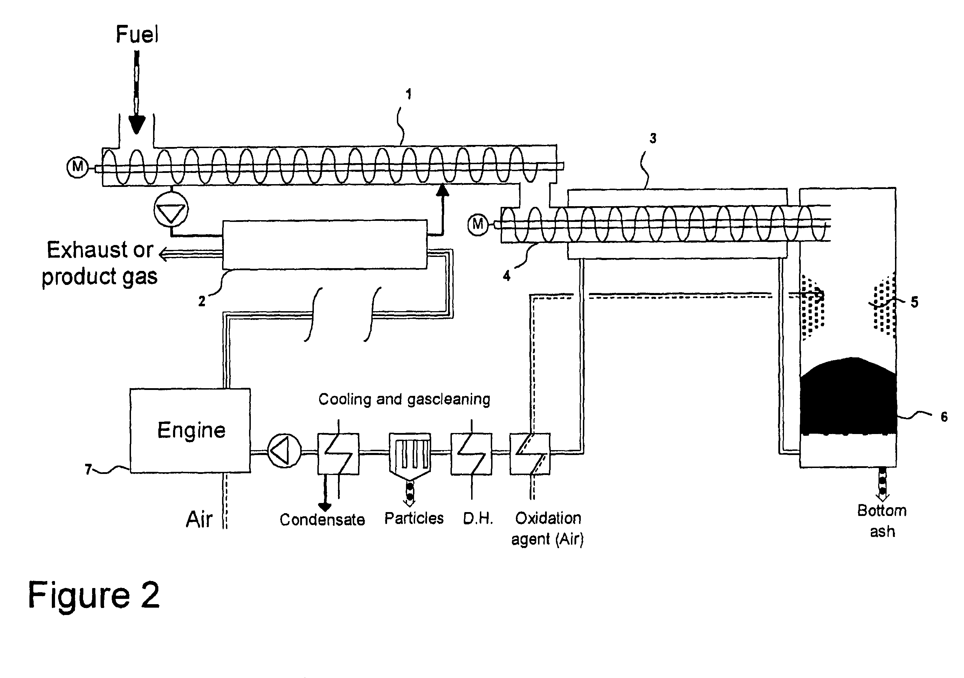

Figure 2 diagrammatically shows an embodiment of the system according to the invention, which in principle corresponds to the system or plant shown in Fig. 1. In the embodiment of Fig. 2 each of the drying and pyrolysis units is in the form of a screw conveyor 1 and 4, respectively, arranged such that the outlet end of the screw conveyor 1 forming the drying unit is communicating with and is discharging into the inlet end of the screw conveyor 4 forming the pyrolysis unit. The screw conveyor 4 discharges into the gasification reactor 6, which is of the moving bed type, and gas from the reactor 6 is supplied to combustion unit in the form of a combustion engine 7.

The mmoist fuel fed into the drying unit 1 is dried by means of superheated steam, which is heated in a super heater in the form of a heat exchanger 2, by exhaust gas from the engine 7. The dryer or screw conveyor 1 is preferably sloping upwardly towards the screw conveyor or pyrolysis unit 4 at an angle of 25-35° with horizontal in order to increase mixing of the fuel, to increase the contact between the fuel and superheated steam, and to lift the fuel to the level of the pyrolysis reactor 4. The pyrolysis unit or screw conveyor 4 is further heated externally by a super heater in the form of a jacket 3 surrounding the screw conveyor 4. At the outlet end of the screw conveyor 4 opens into the upper end of the gasification reactor, which also define an oxidation zone 5 through which the volatiles and possibly also the char fraction from the pyrolysis unit 4 will flow. Preheated air and/or steam is/are injected into the oxidation zone 5, in which a partial oxidation of the volatiles takes place.

The char expelled from the pyrolysis unit 4 is collected in the gasification reactor 6, where it forms a char bed on top of a grate. Hot gases from the oxidation zone 5 flow downwardly through the char bed and react with the char.

Since the gasification reactions taking place in the reactor 6 are endothermic the temperature in the char bed decreases down through the bed. At the top of the bed the temperature may be about 900-1000°C while the temperature of the char/ash at the grate is between 750-800°C.

The char bed also functions as a tar-filter, in which tar that has not been decomposed in the oxidation zone 5 adsorbs to the char. The product gas from the gasification reactor can be used in the heat exchangers for process integration. Following process steps are suggested depending on the moisture content of the fuel:
- Pyrolysis
- Air preheat
- Superheating of steam
- Evaporating of water (if dry fuels are used)
- District heating/other heating.
Since the particles are not sticky bag house filters are recommended as the gas-cleaning technology after cooling of the gas to about 100°C-200°C. Finally, the cooled and cleaned gas is led to a combustion unit, which may be the internal combustion engine 7.

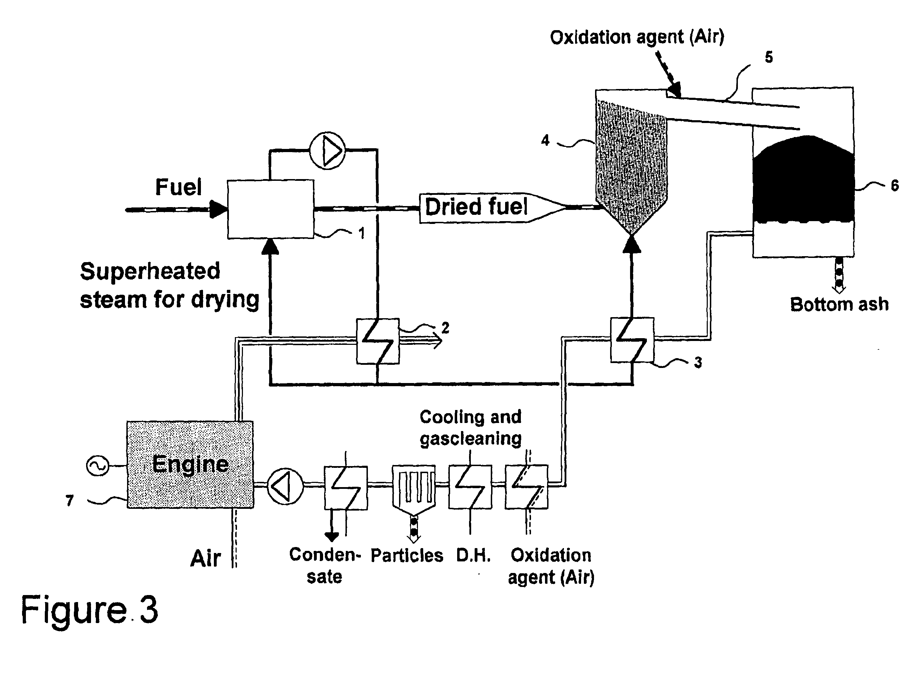

In the embodiment illustrated in Figure 3 the pyrolysis unit 4 is either formed as a bubbling fluid tied, in which the steam acts as fluidising means as well as a heat source for the pyrolysis process, or as a moving bed, in which the fuel is slowly moved upwards when fuel is added at the bottom of the bed. The pyrolysis unit may contain an inactive bed material, e.g. sand or dolomite, to stabilise the flow and the temperature in the unit. The fuel is fed into the lower part of the pyrolysis unit 4 and is passed up through the bed, while the fuel is being heated and pyrolysed. From the upper part of the pyrolysis unit 4 pyrolysed fuel and gas are passed into the oxidation unit 5, where an oxidizing agent is added. The oxidation unit may have nozzles for adding the oxidizing agent, and these nozzles may be tilted so that they may also function as ejectors. The gasification unit 6 is a fixed bed reactor, in which the char forms a bed on a grate. The hot gases from the oxidation unit 5 flow through the char bed, whereby the char is gasified and residual tar is caught in the bed. Solid material is removed, and the gas produced in the gasification reactor 6 is cooled in the super heater 3 by heat exchange with e.g. the exhaust steam from the dryer 1. The gas is further cooled for example by air pre-heating and/or production of district heating and/or evaporation of steam to be supplied to the heater 3. The cooled gas is burnt for example in the combustion engine 7, and the hot exhaust gases from the engine may be utilised for superheating steam in the super heater 2 for the steam supplied to the dryer 1.

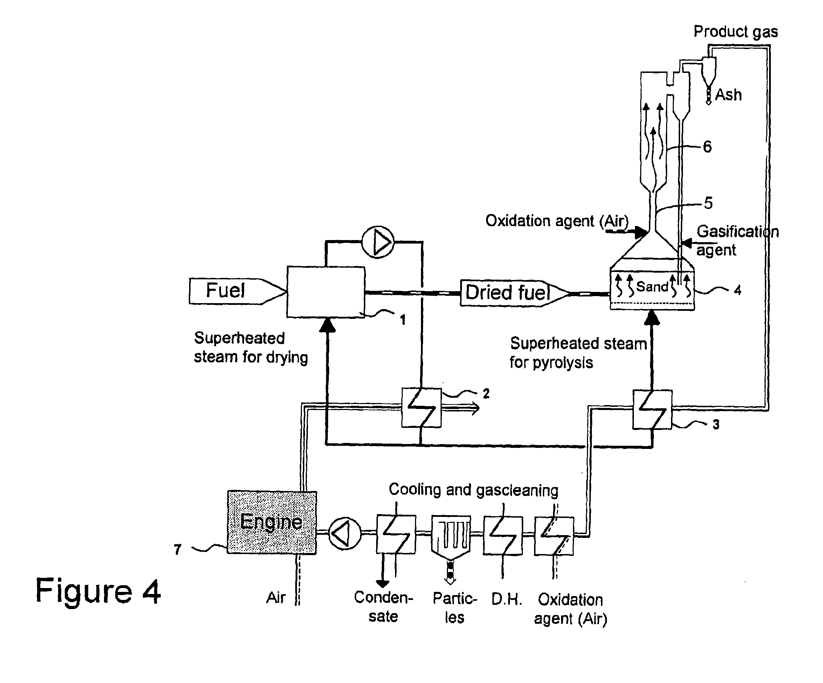

Figure 4 diagrammatically illustrates an embodiment, in which the pyrolysis unit 4, the oxidation unit 5 and the gasification unit 6 are integrated in a fluid bed reador. In this reactor pyrolysis and gasification takes place in a pair of spaced fluid beds with a high temperature oxidation zone in between. In Figure 4, the pyrolysis unit is formed by a bubbling bed 4 at the bottom of the reactor. The hot oxidation zone 5 for partial oxidation is positioned above the pyrolysis zone 4, and at the top of the reactor the char particles are gasified in a circulating type fluid bed forming the gasification unit 6.

In the pyrolysis unit 4 the steam functions not only as fluidisation medium, but also as a heat carrier, while re-circulating char and sand are additional heat carriers. The re-circulating char can be gasified on its way to the pyrolysis zone or by adding some gasification media, such as steam and/or air to a re-circulation conduit interconnecting the upper end of the gasification unit 6 and the upper end of the pyrolysis unit 4. An oxidizing agent may be added to the oxidation unit 5, which between the pyrolysis unit 4 and the oxidizing unit 6 define a throttle. In this throttle the flow velocity of the gas increases thus preventing the char from running from the gasification unit or zone 6 to the pyrolysis unit or zone 4.

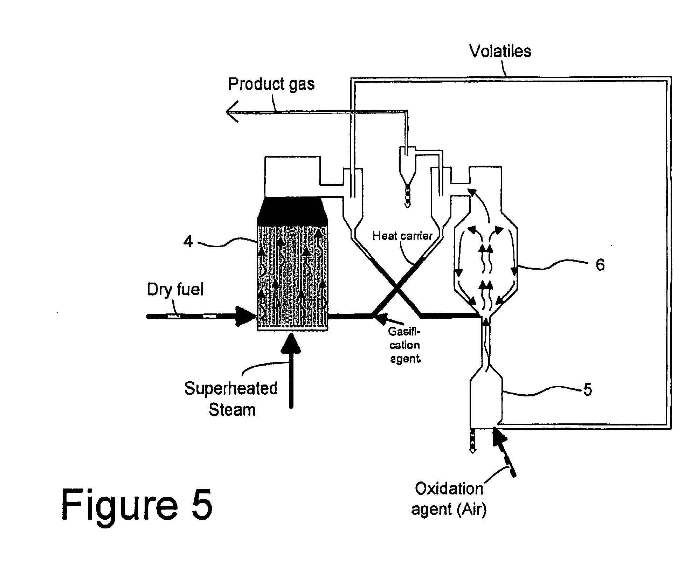

Figure 5 also diagrammatically illustrates an embodiment, in which each of the pyrolysis and gasification units are in the form a fluid bed reactor 4 and 6, respectively, and in which the gas produced is used for driving a gas engine, not shown. Dry fuel, which may have been dried at some other location in any suitable manner, is supplied to the bottom part of the pyrolysis reactor 4 to which superheated steam is also fed from any suitable source, not shown. Volatiles produced in the pyrolysis reactor 4, in which the fluid bed is of the spouted type, are passed to the bottom part of the gasification reactor 6 via the oxidation unit 5, in which the volatiles are partially oxidized. In the embodiment shown in Figure 5 the bed materials and volatiles exhausted from the pyrolysis reactor 4 are separated in a cyclone. The volatiles are led to the oxidation unit 5 and the bed materials are led to the bottom part of gasification reactor 6. A throttle is formed between the oxidation unit 5 and the gasification reactor 6 so as to increase the velocity of the gas flow and thereby prevent material in the gasification reactor 6 from running down into to the lower positioned oxidation unit 5. Bed materials and gas exhausted from the gasification reactor 6 are separated in a wear resistant cyclone. The product gas is led to gas cleaning and cooling steps, and the bed materials are led to the bottom part of the pyrolysis reactor 4, whereby the temperature therein may be increased.

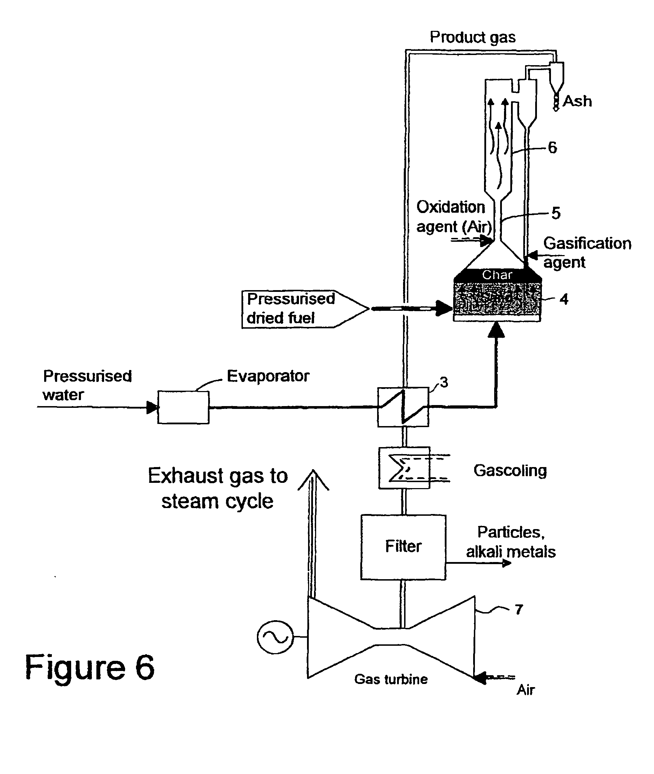

In the embodiment diagrammatically illustrated in Figure 6 the pyrolysis zone 4, the oxidation zone 5, and the gasification zone 6 are integrated in a pressurised reactor as vertically spaced zones, and the zones 4 and 6 are of the fluid bed type. The product gas produced is used for driving the combustion unit in the form of a gas turbine 7. The reactor containing the zones or units 4-6 is similar to the reactor shown in Figure 4. In the present embodiment, however, a pressure exceeding atmospheric pressure is maintained within the reactor. Dried fuel is fed into the pyrolysis unit or zone 4 under pressure. Furthermore, pressurised water is evaporated and fed to a superheater 3 and is thereafter passed into the pyrolysis zone 4 as superheated steam. Product gas from the gasification zone or unit 6 is separated from solid material in a cyclone and is thereafter cooled, cleaned and led to the gas turbine 7.

It should be understood that various modifications, combinations and changes of the embodiments described above could be made without departing from the scope of the invention as defined in the appended claims.

## Claims

1. A method for decomposing fuel comprising biomas, said method comprising
heating the fuel at separate stages, including a drying stage (1), a pyrolysis stage (4), an oxidation stage (5) and in addition a gasification (6) and/or combustion stage (7), to temperatures causing the fuel to decompose into gaseous and solid components,
supplying steam into the pyrolysis stage (4), and
subsequently partially oxidizing volatiles from the pyrolysis at the oxidation stage (5) so as to decompose long molecular and condensable tars of the volatiles into smaller molecules that are less condensable prior to being transferred to the gasification (6) and/or combustion stage (7),
the fuel being heated at the various stages at least mainly by means of the gases formed by the oxidation, gasification and/or combustion processes.

2. A method according to claim 1, wherein the drying stage is performed at a location remote from the location of the other stages, heated steam being supplied to the pyrolysis stage from another steam source.

3. A method according to claim 1, wherein the fuel is dried in a drying unit (1) by contacting it with superheated steam, the dried fuel being transferred to the pyrolysis stage (4), where it is further heated and decomposed into solid and gaseous components, at least some of the steam having been used for drying the fuel in the drying unit being also used for further heating at the pyrolysis stage and/or for heating or use in a subsequent processing stage.

4. A method according to any of the claims 1-3, wherein steam supplied to the drying unit (1) and/or the pyrolysis stage (4) is superheated mainly by gasification gas and/or heat generated by oxidation of fuel components.

5. A method according to any of the claims 1-4 for use in high-grade thermal gasification of the fuel, such as wood chips or a combination of other fuels, said method comprising
supplying one or more of said fuels to a drying unit (1), in which the fuel is dried by contacting it with superheated steam supplied from a super heater (2) so as to provide dried fuel,
transferring the dried fuel to the pyrolysis stage (4),
heating outlet steam/gas from the drying unit in a super heater (3)
supplying the superheated outlet steam/gas to the pyrolysis stage (4) and/or another of the process stages, and
supplying steam and volatiles from the pyrolysis stage to a succeeding process stage (5), in which the volatile pyrolysis products are partially oxidized by adding an oxidizing agent, such as atmospheric air or oxygen prior to being transferred to the gasification (6) and/or combustion stage (7).

6. A method according to claim 5, wherein the exhaust gas supplied to the pyrolysis stage (4) is heated in a super heater (3) by product gas from the gasification stage (6) and/or combustion gas from the combustion stage (7).

7. A method according to claim 6, wherein the process energy necessary for the pyrolysis stage (4) is provided by the superheated steam/gas, possibly supplemented by energy from a partial oxidation stage (5), for example in the form of radiation, and/or supplemented by energy from the gasification stage, for example in the form of feed back of char, gas or bed material.

8. A method according to any of the claims 5-7, wherein the steam supplied to the drying unit (1) from the super heater (2) is heated by product gas from the gasification stage (6) and/or by combustion gas from the combustion stage (7).

9. A method according to any of the claims 5-8, wherein superheated exhaust gas, possibly mixed with another gas, is used as gasification medium, for example at the gasification stage.

10. A method according to any of the claims 1-9, wherein solid components from the pyrolysis stage is passed to the gasification stage totally or partially via a stage at which the volatile pyrolysis products are partially oxidized.

11. A method according to any of the claims 1-10, wherein steam activated char is withdrawn from the pyrolysis stage and/or the gasification stage to be used in purifying gas produced.

12. A system or plant for decomposing fuel comprising biomass, said system comprising:
a drying unit (1),
a pyrolysis unit (4) or a similar processing unit adapted to heat and decompose the fuel into solid and gaseous components,
means (3) for supplying superheated steam to the pyrolysis unit to further heat the fuel therein,
at least one further processing unit (5-7) including an oxidation unit (5) and in addition a gasification and/or combustion stage (7) arranged downstream of the pyrolysis unit (4),
means for supplying steam and volatile pyrolysis products from the pyrolysis unit to the oxidation unit,
means for adding an oxidizer, such as air or another oxygen containing gas, to the volatile pyrolysis products in the oxidation unit for partially oxidizing the same, so as to decompose long molecular and condensable tars of the volatiles into smaller molecules that are less condensable, and
means for transferring the partially oxidized volatile pyrolysis products from the oxidation unit (5) to said gasification and/or combustion stage (7).

13. A system according to claim 12, wherein the drying unit (1) is at a location remote from the location of the other units.

14. A system according to claim 12 or 13, said at least one further processing unit (5-7) comprises a gasification unit (6) having transporting means for transferring solid fuel components from the pyrolysis unit (4) to the gasification unit, which is adapted to heat and further decompose the solid fuel components supplied thereto, and an oxidation unit (5) adapted to partially oxidize gaseous fuel components supplied from the pyrolysis unit, means being provided for transferring at least part of the heat energy generated by the oxidation process to the fuel components in the gasification unit.

15. A system according to any of the claims 12-14, wherein the drying unit (1) is adapted to dry the fuel by contacting it with superheated steam before the fuel is passed into the pyrolysis unit (4), said means (3) for supplying superheated steam to the pyrolysis unit comprising connecting conduits for supplying at least part of the steam having been used for drying the fuel in the drying unit to the pyrolysis unit.

16. A system according to claim 15, further comprising a super heater (3) for heating the steam or gas being supplied to the pyrolysis unit (4) from the drying unit (2).

17. A system according to claim 16, wherein the super heater (3) for heating the steam or gas supplied to the pyrolysis unit (4) is heated by product gas supplied from the gasification unit (6) and/or exhaust gas from a turbine and/or combustion gas from a combustion unit (7).

18. A system according to any of the claims 12-17, further comprising a super heater (2) for heating the steam supplied to the drying unit (1) and means for supplying product gas from a gasification unit (6) and/or combustion gas from a combustion unit (7) to the super heater so as to heat the steam passing there through.

19. A system according to any of the claims 14-18, wherein the transporting means are adapted to pass the solid fuel components from the pyrolysis unit (4) to the gasification unit (6) in such a manner that all or part of said solid components is passed through the oxidizing unit (5) for partially oxidizing volatile pyrolysis products, or such that the oxidizing unit is completely bypassed.

20. A system according to any of the claims 12-19, wherein the pyrolysis unit (4) and/or gasification unit (6) comprises a takeout for taking out steam activated char.

21. A system according to any of the claims 12 and 14-20, wherein the drying unit (1), the pyrolysis unit (4), a zone for partial oxidation (5), and a gasification zone (6) are forming a common entity or a plurality of interconnected units.

22. A system according to any of the claims 12-21 being formed by modules and external heat exchangers.

23. A system according to any of the claims 12-22, wherein the pyrolysis unit is in the form of a screw conveyor (4).

24. A system according to any of the claims 12-23, wherein the drying unit is in the form of a screw conveyor (19).

25. A system according to claim 23 or 24, wherein the screw conveyor is provided with an outer heating jacket (3), means being provided for feeding hot product gas to the jacket so as to heat the content of the screw conveyor.

26. A system according to any of the claims 12-25, wherein the pyrolysis unit and/or the gasification unit is /are in the form of a fluid bed.

27. A system according to claim 26, wherein the gasification unit and the pyrolysis unit are integrated in a common reactor, a gasification zone (6) being arranged spaced vertically above a pyrolysis zone (4), and an oxidation zone (5) being arranged there between.

## Patentansprüche

1. Verfahren zum Abbauen von Brennstoff, umfassend Biomasse, wobei das Verfahren folgendes umfasst
Erwärmung des Brennstoffs in getrennten Stufen, inklusive einer Trocknungsstufe (1), einer Pyrolysestufe (4), einer Oxidationsstufe (5) und darüber hinaus einer Vergasungs- (6) und/oder Verbrennungsstufe (7), auf Temperaturen, die das Abbauen des Brennstoffs zu gasartigen und festen Bestandteilen verursachen,
Zuführung von Dampf in die Pyrolysestufe (4) und
daraufhin teilweise Oxidation von flüchtigen Anteilen aus der Pyrolyse in der Oxidationsstufe (5), so dass lange molekulare und kondensierbare Teere der flüchtigen Anteile in kleinere Molekyle abgebaut werden, die weniger kondensierbar sind, bevor sie zu der Vergasungs- (6) und/oder Verbrennungsstufe (7) überführt werden,
der Brennstoff wird in den verschiedenen Stufen erwärmt, zumindest hauptsächlich mit Hilfe von den Gasen, die durch Oxidations-, Vergasungs- und/oder Verbrennungsverfahren entstehen.

2. Verfahren nach Anspruch 1, wobei die Trocknungsstufe an einer Stelle abseits der Stelle der anderen Stufen ausgeführt wird, wobei erhitzter Dampf aus einer anderen Dampfquelle zu der Pyrolysestufe zugeführt wird.

3. Verfahren nach Anspruch 1, wobei der Brennstoff in einer Trocknungseinheit (1) getrocknet wird, indem er mit überhitztem Dampf in Kontakt gebracht wird, wobei der getrocknete Brennstoff auf die Pyrolysestufe (4) übertragen wird, wo er weiter erhitzt wird und zu festen und gasförmigen Bestandteilen abgebaut wird, wobei zumindest ein Teil des Dampfs, der für die Trocknung des Brennstoffs in der Trocknungseinheit verwendet wurde, auch für die Weitererhitzung in der Pyrolysestufe und/oder für Erhitzung oder Einsatz in einer nachfolgenden Prozessstufe verwendet wird.

4. Verfahren nach irgendeinem der Ansprüche 1-3, wobei Dampf, der der Trocknungseinheit (1) und/oder Pyrolysestufe (4) zugeführt wird, hauptsächlich mit Hilfe von Vergasungsgas und/oder Wärme überhitzt wird, die durch Oxidation von Brennstoffbestandteilen erzeugt wird.

5. Verfahren nach irgendeinem der Ansprüche 1-4 zur Anwendung in Verbindung mit hochwertiger thermischer Vergasung des Brennstoffs, wie zum Beispiel Holzschnitzel oder einer Kombination von anderen Brennstoffen, wobei das Verfahren folgendes umfasst
Zuführung von einem oder mehreren der Brennstoffe zu einer Trocknungseinheit (1), wo der Brennstoff dadurch getrocknet wird, dass er mit überhitztem Dampf in Kontakt gebracht wird, der von einem Überheizer (2) zugeführt wird, um so getrockneten Brennstoff zu schaffen,
Übertragung des getrockneten Brennstoffs auf die Pyrolysestufe (4),
Erhitzung von Auslassdampf/-gas aus der Trocknungseinheit in einem Überheizer (3),
Zuführung des überhitzten Auslassdampfs/-gases zu der Pyrolysestufe (4) und/oder einer anderen Prozessstufe, und
Zuführung von Dampf und flüchtigen Anteilen von der Pyrolysestufe zu einer nachfolgenden Prozessstufe (5), wo die flüchtigen Pyrolyseprodukte teilweise dadurch oxidiert werden, dass ein Oxidationsmittel, wie zum Beispiel atmosphärische Luft oder Oxygen, beigefügt wird, bevor es auf die Vergasungs-(6) und/oder Verbrennungsstufe (7) übertragen wird.

6. Verfahren nach Anspruch 5, wobei das Abgas, das der Pyrolysestufe (4) zugeführt wird, in einem Überheizer (3) mit Hilfe von Produktgas aus der Vergasungsstufe (6) und/oder Verbrennungsgas aus der Verbrennungsstufe (7) erhitzt wird.

7. Verfahren nach Anspruch 6, worin die Prozessenergie, die für die Pyrolysestufe (4) notwendig ist, durch den/das übererhitzten/übererhitzte Dampf/Gas hergestellt wird, eventuell ergänzt durch Energie aus einer teilweisen Oxidationsstufe (5), zum Beispiel in der Form von Strahlung, und/oder ergänzt durch Energie aus der Vergasungsstufe, z.B. in der Form einer Rückführung von Holzkohle, Gas oder Schüttgut.

8. Verfahren nach irgendeinem der Ansprüche 5-7, worin der Dampf, der vom Überheizer (2) an die Trocknungseinheit (1) zugeführt wird, mit Hilfe von Produktgas aus der Vergasungsstufe (6) und/oder Verbrennungsgas aus der Verbrennungsstufe (7) erhitzt wird.

9. Verfahren nach irgendeinem der Ansprüche 5-8, wobei überhitztes Abgas, eventuell mit einem anderen Gas gemischt, als Vergasungsmedium, zum Beispiel in der Vergasungsstufe, eingesetzt wird.

10. Verfahren nach irgendeinem der Ansprüche 1-9, worin feste Bestandteile aus der Pyrolysestufe völlig oder teilweise zu der Vergasungsstufe geleitet werden, via eine Stufe, wo die flüchtigen Pyrolyseprodukte teilweise oxidiert werden.

11. Verfahren nach irgendeinem der Ansprüche 1-10, worin dampfaktivierte Holzkohle aus der Pyrolysestufe und/oder der Vergasungsstufe, die zur Aufreinigung des hergestellten Gases verwendet werden soll, abgezogen wird.

12. System oder Anlage zum Abbauen von Brennstoff, umfassend Biomasse, wo das System folgendes umfasst:
eine Trocknungseinheit (1),
eine Pyrolyseeinheit (4) oder eine ähnliche Prozesseinheit, die an Erhitzung und Abbauen des Brennstoffs zu festen und gasartigen Bestandteilen angepasst ist,
Mittel (3) zur Zuführung von überhitztem Dampf zu der Pyrolyseeinheit, um den Brennstoff darin weiter zu erhitzen,
mindestens eine weitere Prozesseinheit (5-7), inklusive einer Oxidationseinheit (5) und darüber hinaus eine Vergasungs- und/oder Verbrennungsstufe (7), angeordnet in einer im Verhältnis zur Pyrolyseeinheit (4) nachgeordneten Weise,
Mittel zur Zuführung von Dampf und flüchtigen Pyrolyseprodukten aus der Pyrolyseeinheit zu der Oxidationseinheit,
Mittel zur Beifügung eines Oxidationsmittels, wie zum Beispiel Luft oder eines anderen oxygenhaltigen Gases, an die flüchtigen Pyrolyseprodukte in der Oxidationseinheit zur teilweisen Oxidation dergleichen, um lange molekulare und kondensierbare Teere der flüchtigen Anteile zu kleineren Molekülen abzubauen, die weniger kondensierbar sind, und
Mittel zur Übertragung der teilweise oxidierten flüchtigen Pyrolyseprodukte aus der Oxidationseinheit (5) auf die Vergasungs- und/oder Verbrennungsstufe (7).

13. System nach Anspruch 12, worin sich die Trocknungseinheit (1) an einer Stelle abseits der Stelle der anderen Einheiten befindet.

14. System nach Anspruch 12 oder 13, wobei mindestens eine weitere Prozesseinheit (5-7) eine Vergasungseinheit (6) umfasst, die Transportmittel zur Übertragung von festen Brennstoffbestandteilen aus der Pyrolyseeinheit (4) auf die Vergasungsstufe besitzt, die an Erhitzung angepasst ist und weiter die festen Brennstoffbestandteile, die dahin zugeführt werden, abbaut, und eine Oxidationseinheit (5), die an eine teilweise Oxidation von gasartigen Brennstoffbestandteilen angepasst ist, die aus der Pyrolyseeinheit zugeführt werden, wobei Mittel für die Übertragung von mindestens einem Teil der Wärmeenergie, die durch den Oxidationsprozess erzeugt wird, auf die Brennstoffbestandteile in der Vergasungseinheit gewährleistet werden.

15. System nach irgendeinem der Ansprüche 12-14, wobei die Trocknungseinheit (1) zur Trocknung des Brennstoffs dadurch angepasst wird, dass sie mit überhitztem Dampf in Kontakt gebracht wird, bevor der Brennstoff in die Pyrolyseeinheit (4) geleitet wird, wobei die Mittel (3) zur Zuführung von überhitztem Dampf zu der Pyrolyseeinheit Verbindungsleitungen zur Zuführung von mindestens einem Teil des Dampfs, der zur Trocknung des Brennstoffs in der Trocknungseinheit an die Pyrolyseeinheit verwendet worden ist, umfassen.

16. System nach Anspruch 15, ferner umfassend einen Überheizer (3) zur Erhitzung des Dampfs oder Gases, der/das von der Trocknungseinheit (2) zu der Pyrolyseeinheit (4) zugeführt wird.

17. System nach Anspruch 16, wobei der Überheizer (3) zur Erhitzung des Dampfs oder Gases, der/das der Pyrolyseeinheit (4) zugeführt ist, mit Hilfe von Produktgas erhitzt wird, das aus der Vergasungseinheit (6) und/oder Abgas aus einer Turbine und/oder Verbrennungsgas aus einer Verbrennungseinheit (7) zugeführt wird.

18. System nach irgendeinem der Ansprüche 12-17, ferner umfassend einen Überheizer (2) zur Erhitzung des Dampfs, der der Trocknungseinheit (1) zugeführt wird, und Mittel zur Zuführung von Produktgas aus einer Vergasungseinheit (6) und/oder Verbrennungsgas aus einer Verbrennungseinheit (7) an den Überheizer, um den Dampf, der dadurch läuft, zu erhitzen.

19. System nach irgendeinem der Ansprüche 14-18, wobei die Transportmittel angepasst sind, um die festen Brennstoffbestandteile aus der Pyrolyseeinheit (4) an die Vergasungseinheit (6) in solch eine Weise zu leiten, dass alle oder Teile der festen Bestandteile durch die Oxidationseinheit (5) geleitet werden, um flüchtige Pyrolyseprodukte teilweise zu oxidieren, oder in solch eine Weise, dass die Oxidationseinheit völlig umgangen wird.

20. System nach irgendeinem der Ansprüche 12-19, worin die Pyrolyseeinheit (4) und/oder Vergasungseinheit (6) eine Entnahme zur Entnahme von dampfaktivierter Holzkohle umfasst.

21. System nach irgendeinem der Ansprüche 12 und 14-20, worin die Trocknungseinheit (1), die Pyrolyseeinheit (4), eine Zone für teilweise Oxidation (5) und eine Vergasungszone (6) eine gemeinsame Einheit oder eine Vielfalt von verbundenen Einheiten darstellt.

22. System nach irgendeinem der Ansprüche 12-21, das durch Module und äußere Wärmeaustauchapparate gestaltet wird.

23. System nach irgendeinem der Ansprüche 12-22, wobei die Pyrolyseeinheit in der Form eines Schneckenförderers (4) ist.

24. System nach irgendeinem der Ansprüche 12-23, wobei die Trocknungseinheit in der Form eines Schneckenförderers (19) ist.

25. System nach Anspruch 23 oder 24, wobei der Schneckenförderer mit einem äußeren Heizmantel (3) ausgerüstet ist, wobei Mittel zur Lieferung von heizem Produktgas an den Mantel gewährleistet werden, um den Inhalt des Schneckenförderes zu erhitzen.

26. System nach irgendeinem der Ansprüche 12-25, wobei die Pyrolyseeinheit und/oder die Vergasungseinheit in der Form eines Fließbettes sind.

27. System nach Anspruch 26, wobei die Vergasungseinheit und die Pyrolyseeinheit in einem gemeinsamen Reaktor integriert sind, eine Vergasungszone (6), die mit Abständen vertikal über einer Pyrolysezone (4) ausgerichtet ist, und eine Oxidationszone (5), die dazwischen ausgerichtet ist.

## Revendications

1. Méthode pour décomposer un combustible comprenant de la biomasse ; ladite méthode comprenant
le chauffage du combustible à des stades séparés, y compris un stade de séchage (1), un stade de pyrolyse (4), un stage d'oxydation (5) et en plus un stade de gazéification (6) et/ou un stade de combustion (7), à des températures causant la décomposition du combustible en des composants gazeux et solides,
l'approvisionnement en vapeur dans le stade de pyrolyse (4), et
ultérieurement l'oxydation partielle de composés volatiles provenant de la pyrolyse vers le stade d'oxydation (5) de manière à décomposer les goudrons à longues molécules et condensables des composés volatiles en des molécules plus petites qui soient moins condensables antérieurement à leur transfert vers le stade de gazéification (6) et/ou le stade de combustion (7),
le combustible étant chauffé aux différents stades au moins principalement par le moyen des gaz formés par les procédés d'oxydation, de gazéification et/ou de combustion.

2. Méthode selon la revendication 1, où le stade de séchage est effectué dans une position éloignée de la position des autres stades, la vapeur chauffée étant fournie au stade de pyrolyse à partir d'une autre source de vapeur.

3. Méthode selon la revendication 1, où le combustible est séché dans une unité de séchage (1) en étant mis en contact avec de la vapeur surchauffée, le combustible séché étant transféré vers le stade de pyrolyse (4), où il est chauffé plus avant et décomposé en composants solides et gazeux, au moins une partie de la vapeur ayant été utilisée pour sécher le combustible dans l'unité de séchage étant également utilisée pour chauffer plus avant au stade de pyrolyse et/ou pour chauffer ou être utilisée dans un stade de traitement ultérieur.

4. Méthode selon une quelconque des revendications 1-3, où la vapeur fournie à l'unité de séchage (1) et/ou vers le stade de pyrolyse (4) est surchauffée principalement par des gaz issus de la gazéification et/ou par de la chaleur générée par l'oxydation des composants du combustible.

5. Méthode selon une quelconque des revendications 1-4 pour usage dans la gazéification thermale de haut degré du combustible, comme par exemple de copeaux de bois ou d'une combinaison d'autres combustibles, ladite méthode comprenant
l'approvisionnement d'une unité de séchage (1) en un ou en plusieurs desdits combustibles, unité dans laquelle le combustible est séché en étant mis en contact avec de la vapeur surchauffée fournie depuis un appareil de surchauffe (2) de manière à fournir du combustible séché,
le transfert du combustible vers le stade de pyrolyse (4),
le chauffage de la vapeur/des gaz de sortie depuis l'unité de séchage dans un appareil de surchauffe (3),
l'approvisionnement du stade de pyrolyse (4) et/ou d'un autre des stades de traitement en vapeur/gaz de sortie surchauffés, et
l'approvisionnement en vapeur et en composés volatiles issus du stade de pyrolyse vers un stade de traitement (5) lui succédant, dans lequel les produits volatiles de la pyrolyse sont partiellement oxydés par l'ajout d'un agent oxydant, tel que de l'air atmosphérique ou de l'oxygène, avant leur transfert vers le stade de gazéification (6) et/ou le stade de combustion (7).

6. Méthode selon la revendication 5, où le gaz d'échappement fourni vers le stade de pyrolyse (4) est chauffé dans un appareil de surchauffe (3) par des gaz qui sont des produits issus du stade de gazéification (6) et/ou des gaz de combustion issus du stade de combustion (7).

7. Méthode selon la revendication 6, où l'énergie de traitement nécessaire pour le stade de pyrolyse (4) est fournie par les vapeurs/gaz surchauffés, éventuellement complémentée par de l'énergie issue d'un stade d'oxydation partielle (5), par exemple sous la forme de rayonnement, et/ou complémentée par de l'énergie issue du stade de gazéification, par exemple sous la forme de réalimentation en charbon, en gaz ou en matériaux du lit.

8. Méthode selon une quelconque des revendications 5-7, où la vapeur fournie à l'unité de séchage (1) depuis l'appareil de surchauffe (2) est chauffée par des gaz qui sont des produits issus du stade de gazéification (6) et/ou par des gaz de combustion issus du stade de combustion (7).

9. Méthode selon une quelconque des revendications 5-8, où le gaz d'échappement surchauffé, éventuellement mélangé avec un autre gaz, est utilisé en tant que milieu de gazéification, par exemple au stade de gazéification.

10. Méthode selon une quelconque des revendications 1-9, où l'on fait passer les composants solides issus du stade de pyrolyse vers le stade de gazéification totalement ou partiellement par l'intermédiaire d'un stade dans lequel les produits volatiles issus de la pyrolyse sont partiellement oxydés.

11. Méthode selon une quelconque des revendications 1-10, où le charbon activé par la vapeur est retiré du stade de pyrolyse et/ou du stade de gazéification pour être utilisé dans la purification des gaz produits.

12. Système ou complexe pour décomposer un combustible comprenant de la biomasse, ledit système comprenant :
une unité de séchage (1),
une unité de pyrolyse (4) ou une unité de traitement similaire adaptée pour chauffer et décomposer le combustible en composants solides et gazeux,
des moyens (3) pour approvisionner l'unité de pyrolyse en vapeur surchauffée afin de chauffer plus avant le combustible dans celle-ci,
au moins une unité de traitement supplémentaire (5-7) incluant une unité d'oxydation (5) et en plus un stade de gazéification et/ou un stade de combustion (7) arrangé en aval de l'unité de pyrolyse (4),
des moyens pour approvisionner l'unité d'oxydation en vapeur et en produits volatiles de pyrolyse issus de l'unité de pyrolyse,
des moyens pour ajouter un agent oxydant, comme par exemple de l'air ou un autre gaz contenant de l'oxygène, aux produits volatiles de pyrolyse dans l'unité d'oxydation pour oxyder partiellement ceux-ci, de manière à décomposer les goudrons à longues molécules et condensables des composés volatiles en des molécules plus petites qui soient moins condensables, et
des moyens pour transférer les produits volatiles de pyrolyse partiellement oxydés depuis l'unité d'oxydation (5) vers ledit stade de gazéification et/ou stade de combustion (7).

13. Système selon la revendication 12, où l'unité de séchage (1) est à une position distante de la position des autres unités.

14. Système selon les revendications 12 ou 13, où ladite au moins une unité de traitement supplémentaire (5-7) comprend une unité de gazéification (6) ayant des moyens de transport pour transférer des composants solides du combustible depuis l'unité de pyrolyse (4) vers l'unité de gazéification, qui est adaptée pour chauffer et décomposer plus avant les composants solides du combustible qui lui sont fournis, et une unité d'oxydation (5) adaptée pour oxyder partiellement des composants gazeux du combustible fournis depuis l'unité de pyrolyse, des moyens étant fournis pour transférer au moins une partie de l'énergie calorifique générée par le procédé d'oxydation aux composants du combustible dans l'unité de gazéification.

15. Système selon une quelconque des revendications 12-14, où l'unité de séchage (1) est adaptée pour sécher le combustible en le mettant en contact avec de la vapeur surchauffée avant que l'on fasse passer le combustible dans l'unité de pyrolyse (4), lesdits moyens (3) pour approvisionner l'unité de pyrolyse en vapeur surchauffée comprenant des conduits connecteurs pour approvisionner l'unité de pyrolyse en au moins une partie de la vapeur ayant été utilisée pour sécher le combustible dans l'unité de séchage.

16. Système selon la revendication 15, comprenant en outre un appareil de surchauffe (3) pour chauffer la vapeur ou les gaz étant fournis à l'unité de pyrolyse (4) depuis l'unité de séchage (2).

17. Système selon la revendication 16, où l'appareil de surchauffe (3) pour chauffer la vapeur ou les gaz fournis depuis l'unité de pyrolyse (4) est chauffé par des gaz qui sont des produits fournis depuis l'unité de gazéification (6) et/ou des gaz d'échappement depuis une turbine et/ou des gaz de combustion depuis une unité de combustion (7).

18. Système selon une quelconque des revendications 12-17, comprenant en outre un appareil de surchauffe (2) pour chauffer la vapeur fournie à l'unité de séchage (1) et des moyens pour approvisionner en gaz qui sont des produits depuis une unité de gazéification (6) et/ou en gaz de combustion depuis une unité de combustion (7), l'appareil de surchauffe de manière à chauffer la vapeur qui y passe au travers.

19. Système selon une quelconque des revendications 14-18, où les moyens de transport sont adaptés pour faire passer les composants solides du combustible depuis l'unité de pyrolyse (4) vers l'unité de gazéification (6) d'une manière telle que tous lesdits ou une partie desdits composants solides sont passés à travers l'unité d'oxydation (5) pour oxyder partiellement les produits volatiles de pyrolyse, ou de manière telle que l'unité d'oxydation soit complètement évitée.

20. Système selon une quelconque des revendications 12-19, où l'unité de pyrolyse (4) et/ou l'unité de gazéification (6) comprend une sortie pour faire sortir le charbon activé par la vapeur.

21. Système selon une quelconque des revendications 12 et 14-20, où l'unité de séchage (1), l'unité de pyrolyse (4), une zone d'oxydation partielle (5), et une zone de gazéification (6) forment une entité commune ou une pluralité d'unités interconnectées.

22. Système selon une quelconque des revendications 12-21 étant formé par des modules et des échangeurs calorifiques externes.

23. Système selon une quelconque des revendications 12-22, où l'unité de pyrolyse est sous la forme d'un transporteur à vis (4).

24. Système selon une quelconque des revendications 12-23, où l'unité de séchage est sous la forme d'un transporteur à vis (19).

25. Système selon les revendications 23 ou 24, où le transporteur à vis est fourni avec une enveloppe chauffante externe (3), des moyens étant fournis pour alimenter l'enveloppe en gaz chauds produits de manière à chauffer le contenu du transporteur à vis.

26. Système selon une quelconque des revendications 12-25, où l'unité de pyrolyse et/ou l'unité de gazéification est/sont sous la forme d'un lit fluidifié.

27. Système selon la revendication 26, où l'unité de gazéification et l'unité de pyrolyse sont intégrées dans un réacteur commun, une zone de gazéification (6) étant arrangée de manière à être placée verticalement au-dessus d'une zone de pyrolyse (4), et une zone d'oxydation (5) étant arrangée entre elles.
